Europäisches Patentamt

European Patent Office

Office européen des brevets

(11) Numéro de publication: **0 271 085 B1**

# FASCICULE DE BREVET EUROPEEN

(45) Date de publication de fascicule du brevet:
08.05.91

(51) Int. Cl.5: **H01M 6/34**, H01M 6/32

(21) Numéro de dépôt: **87118256.4**

(22) Date de dépôt: **09.12.87**

(54) **Pile amorcable.**

(30) Priorité: **10.12.86 FR 8617277**

(43) Date de publication de la demande:
**15.06.88 Bulletin 88/24**

(45) Mention de la délivrance du brevet:
**08.05.91 Bulletin 91/19**

(84) Etats contractants désignés:
**DE FR GB IT**

(56) Documents cités:
**GB-A- 1 367 818**
**US-A- 3 513 031**
**US-A- 4 435 487**

**PATENT ABSTRACTS OF JAPAN, vol. 9, no.
110 (E-314)[1833], 15 mai 1985; & JP-A-60
1764 (NIHON DENCHI K.K.) 07-01-1985**

(73) Titulaire: **Société Anonyme dite SAFT
156, avenue de Metz
F-93230 Romainville(FR)**

(72) Inventeur: **Leben, Yannick
10 rue Albert Laurenson
F-93000 Bobigny(FR)**
Inventeur: **D'Ussel, Louis
64 rue de Saussure
F-75017 Paris(FR)**

(74) Mandataire: **Weinmiller, Jürgen et al
Lennéstrasse 9 Postfach 24
W-8133 Feldafing(DE)**

## Description

La présente invention concerne une pile amorçable à l'eau ou à l'eau de mer, mettant en œuvre notamment le couple électrochimique AgO/Al. Une pile de ce genre s'applique en particulier à la propulsion des véhicules sous-marins.

Schématiquement une telle pile comprend :

- un bloc électrochimique mettant en oeuvre des couples AgO/Al et présentant une entrée et une sortie pour un circuit de distribution d'électrolyte à base de soude,
- ledit circuit de distribution d'électrolyte comportant une entrée pour l'eau de mer, une pompe pour la circulation de l'électrolyte, un réservoir d'électrolyte en solution dont une première sortie est reliée directement à une première entrée d'une vanne thermostatique et dont une seconde sortie est reliée par l'intermédiaire d'un échangeur thermique à une seconde entrée de ladite vann thermostatique dont la sortie est reliée à l'entrée dudit bloc électrochimique.

Au moment de l'amorçage une vanne s'ouvre pour faire entrer de l'eau de mer dans le réservoir d'électrolyte qui contient de la soude solide, et le circuit de distribution d'électrolyte est amorcé.

Au cours de la décharge, il se forme des aluminates dans l'électrolyte et leur concentration est telle qu'elle parvient à limiter la durée de la décharge de la pile ; elle est en effet directement proportionnelle à la capacité restituée.

Pour éviter cette limitation de capacité, il peut être envisagé d'augmenter le volume d'électrolyte, mais c'est impossible dans la plupart des applications concernées à cause de la masse et de l'encombrement supplémentaires qui en résultent.

La présente invention a pour but de résoudre le problème de l'élimination des aluminates de manière simple, en évitant les inconvénients précités.

La présente invention a pour objet une pile amorçable à l'eau de mer comprenant :

- un bloc électrochimique mettant en oeuvre des couples AgO/Al et présentant une entrée et une sortie pour un circuit de distribution d'électrolyte à base de soude,
- ledit circuit de distribution d'électrolyte comportant une entrée pour l'eau de mer une sortie pour l'évacuation vers la mer, une pompe pour la circulation de l'électrolyte, un réservoir d'électrolyte en solution dont une première sortie est reliée directement à une première entrée d'une vanne thermostatique et dont une seconde sortie est reliée par l'intermédiaire d'un échangeur thermique à une seconde entrée de ladite vanne thermostatique dont la sortie est reliée à l'entrée dudit bloc électrochimique,

caractérisée par le fait que ledit réservoir d'électrolyte est muni d'une cloison le séparant en un premier réservoir et un second réservoir, pouvant être mis en communication entre eux,

et par le fait qu'elle comporte en outre des moyens pour vidanger ledit premier réservoir après une durée de décharge déterminée et des moyens pour le remplir immédiatement en électrolyte à partir d'eau de mer supplémentaire et de l'électrolyte contenu dans ledit second réservoir.

De préférence ledit premier et ledit second réservoir sont remplis simultanément en eau de mer au moment de l'amorçage ; ledit premier réservoir contient avant amorçage de la soude anhydre en poudre, tandis que ledit second réservoir contient de la soude en pastilles.

D'autres caractéristiques et avantages de la présente invention apparaîtront au cours de la description suivante de modes de réalisation donnés à titre illustratif mais nullement limitatif.

Dans le dessin annexé :

- la figure 1 est une vue partielle schématique en coupe d'une pile amorçable selon l'art antérieur,
- la figure 2 est une vue partielle schématique en coupe d'une pile selon l'invention,
- la figure 3 est un schéma de fonctionnement du dispositif de la figure 2,
- les figures 4A-4B, 5A-5B, 6A-6B, 7A-7B, 8A-8B sont des schémas montrant respectivement dans leurs différences phases de fonctionnement l'état des deux vannes du dispositif de la figure 2,
- la figure 9 montre des courbes de décharge d'une pile de l'art antérieur et d'une pile selon la figure 2.

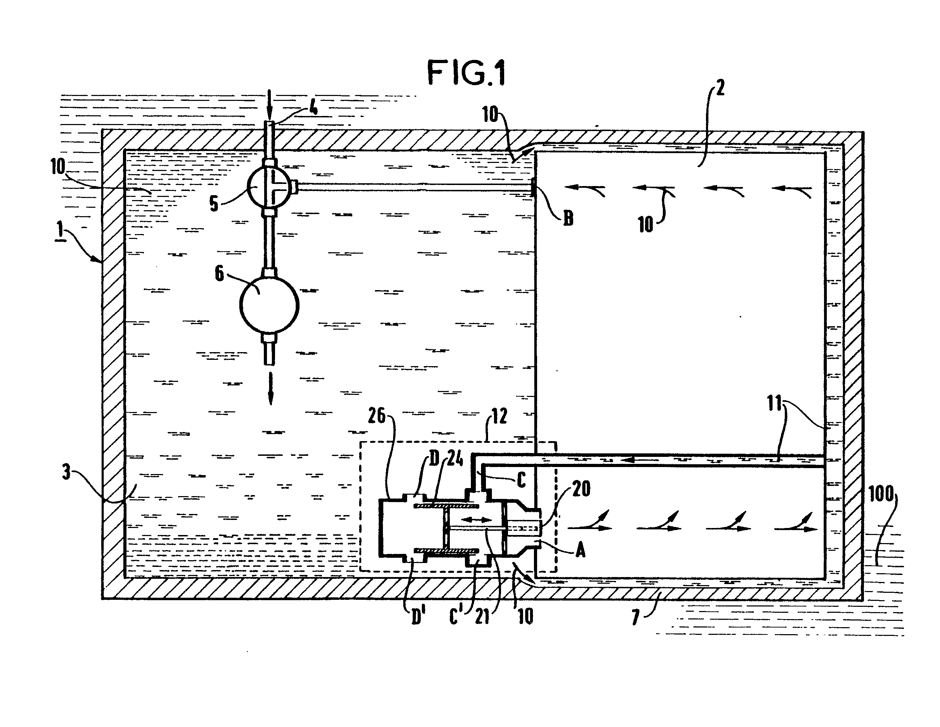

On a illustré très schématiquement dans la figure 1 une pile amorçable selon l'art antérieur disposée dans la coque 1 d'un véhicule immergé dans l'eau de mer 100. Elle comporte des organes d'amorçage qui ne font pas l'objet de la présente demande, un bloc électrochimique 2 constitué de couples AgO/Al, et un circuit de distribution pour l'électrolyte 10, cet électrolyte entrant par l'orifice A dans le bloc 2 et en sortant par l'orifice B.

Le circuit de distribution comporte un réservoir 3, une pompe 6, reliée à une arrivée d'eau de mer 4 par une vanne 5.

Le bloc électrochimique 2 est entouré d'un échangeur thermique 7 indispensable, car, au cours de la décharge, on constate un échauffement de l'électrolyte 10.

L'électrolyte chaud 10 circule entre le bloc électrochimique 2 et la coque 1 de manière à être refroidi par l'eau de mer ; l'électrolyte 11 refroidi sortant de l'échangeur thermique 7 par l'orifice C, peut être réinjecté à l'entrée A du bloc électrochimique 2 grâce à une vanne thermostatique 12. On trouve dans la figure 1 des entrées D, D', de la vanne thermostatique 12 pour l'électrolyte chaud 10, et des entrées C et C' d'électrolyte 11 refroidi issu de l'échangeur thermique 7. La vanne thermostatique 12 est munie d'une capsule thermostatique 20 et d'une tige 21 mobile en fonction de la température et coopérant avec un piston 24 logé dans un corps 26. Le piston 24 est susceptible d'obturer plus ou moins les entrées D, D', C et C', pour réguler la température de l'électrolyte.

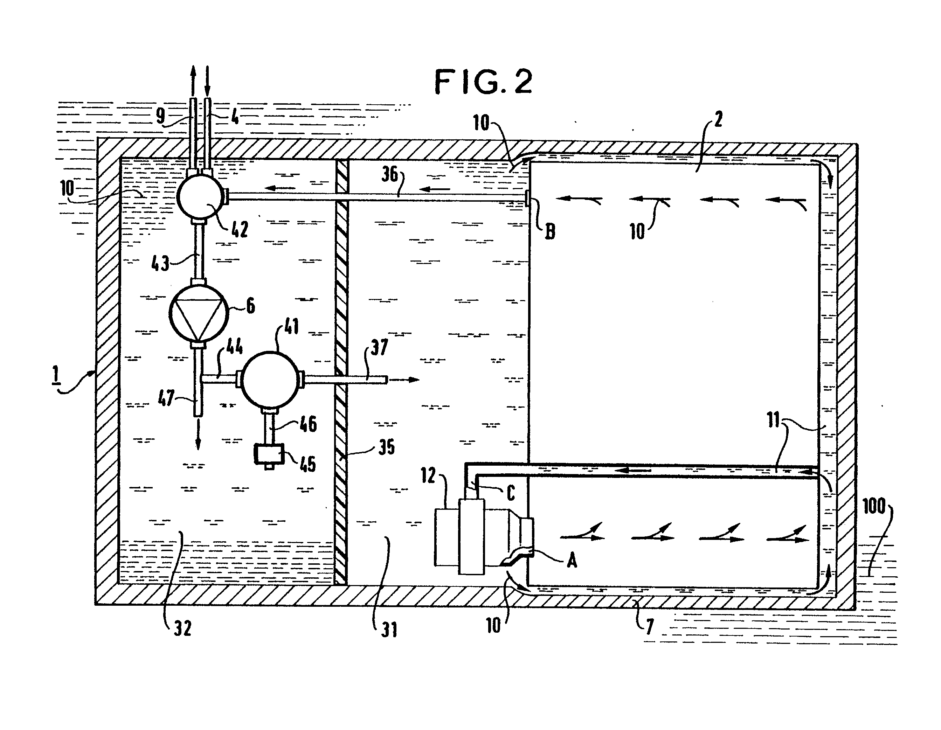

Dans la pile selon l'invention illustrée dans la figure 2, les éléments analogues à ceux de la figure 1 ont les mêmes nombres de référence.

On retrouve ainsi le bloc électrochimique 2 avec son entrée A et sa sortie B d'électrolyte, l'échangeur thermique 7 et la vanne thermostatique 12.

Par contre, le réservoir 3 de la figure 1 est remplacé par un réservoir possédant sensiblement le même volume, mais cloisonné par une paroi 35, par exemple en matière plastique. Elle définit un premier réservoir 31 contenant avant l'amorçage de la soude anhydre en poudre et un second réservoir 32 contenant avant l'amorçage de la soude anhydre, de préférence en pastilles.

Le circuit de distribution d'électrolyte comporte :

- une pompe 6, munie d'une canalisation 47 aboutissant dans le réservoir 32,
- une vanne 42 pouvant communiquer avec une entrée d'eau de mer 4, une sortie d'eau de mer 9, la pompe 6 par une canalisation 43, et la sortie B du bloc électrochimique 2 par une canalisation 36 traversant la paroi 35,
- une vanne 41 pouvant communiquer avec la pompe 6 par une canalisation 44, le réservoir 31 par une canalisation 37 traversant la paroi 35, et le réservoir 32 par une canalisation 46 munie d'un filtre 45 destiné à éviter le passage de pastilles se soude,
- un dispositif de commande (non illustré sur la figure) des deux vannes 41 et 42, piloté notamment par la tension aux bornes du bloc électrochimique 2.

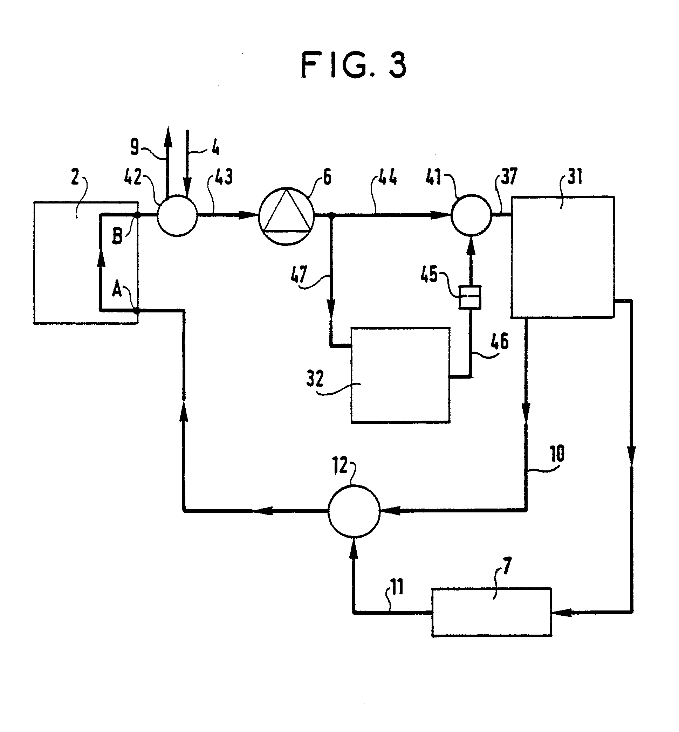

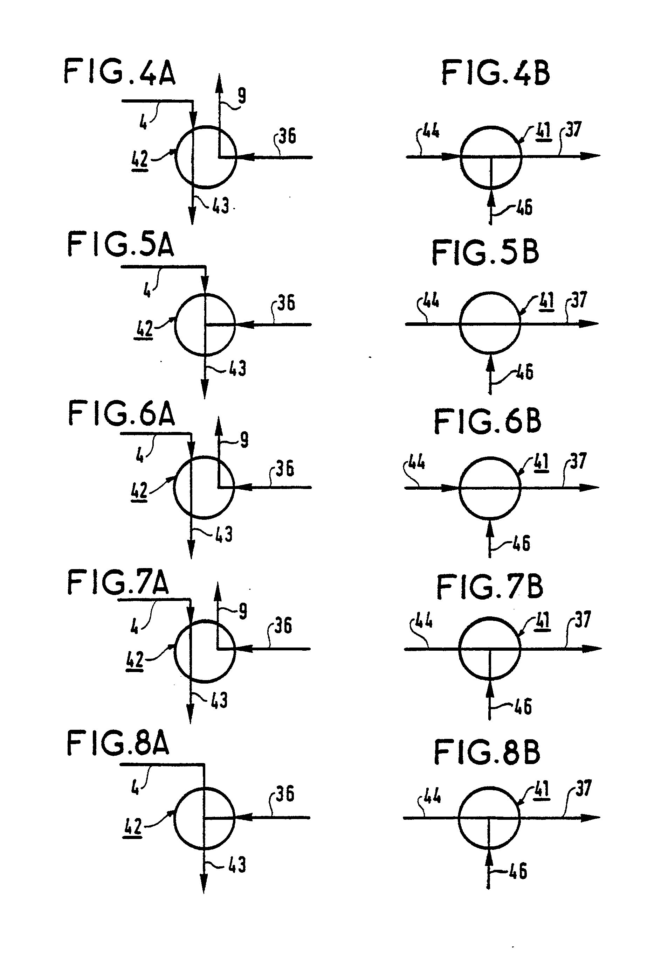

On retrouve dans la figure 3 le schéma de fonctionnement du dispositif de la figure 2. Au moment de l'amorçage de la pile, qui dure quelques secondes, par exemple 4 à 6 secondes, (voir figures 4A et 4B), la vanne 42 met en communication l'entrée d'eau de mer 4 avec la pompe 6 par la canalisation 43. Grâce à la canalisation 47, le réservoir 32 se remplit. Simultanément la vanne 41 met en communication par la canalisation 44 la pompe avec la canalisation 37 qui permet le remplissage du réservoir 31. Afin que le remplissage puisse s'effectuer complètement dans les deux réservoirs, un peu d'eau du réservoir 32 est entraînée dans le filtre 45 puis, par l'intermédiaire de la vanne 41, dans la canalisation 37. Dès que le remplissage est effectué, et que le bloc électrochimique 2 est complètement rempli, la canalisation 36 renvoie de l'électrolyte par l'intermédiaire de la vanne 42 à la sortie 9 vers la mer.

La soude anhydre en poudre se dissout instantanément dans le réservoir 31 tandis que la soude en pastilles mettra quelques minutes à se dissoudre dans le réservoir 32.

Lorsqu'une tension apparaît aux bornes du bloc électrochimique 2, (voir figures 5a et 5b), la vanne 42 interrompt la fuite vers la sortie 9, et la vanne 41 interrompt la liaison entre le réservoir 31 et le réservoir 32.

Dans la suite de la décharge, une forte puissance électrique est demandée, la concentration en aluminates augmente. Elle devient telle qu'on détecte une chute de la tension aux bornes du bloc électrochimique et qu'on approche donc de la valeur critique acceptable. A ce moment, le dispositif de commande entame la phase illustrée dans les figures 6A et 6B, consistant à vidanger totalement le réservoir 31 et à remplir l'ensemble avec de l'eau de mer et l'électrolyte se trouvant dans le réservoir 32.

Au niveau de la vanne 42 (figure 6A) la canalisation 36 est mise en communication avec la sortie 9, et de l'eau de mer entre par l'entrée 4. Au niveau de la vanne 41, l'eau de mer entre par la canalisation 37 dans le réservoir 31.

Après quelques secondes de vidange, on introduit l'électrolyte concentré du réservoir 32 dans le réservoir 31 (voir figures 7A et 7B), et on aboutit à la situation illustrée dans les figures 8A et 8B. Les deux réservoirs et le bloc électrochimique sont remplis d'électrolyte frais à la bonne concentration et la décharge du bloc électrochimique 2 peut se poursuivre encore quelques minutes au niveau souhaité.

A titre d'exemple :

- le volume de l'électrolyte mis en oeuvre dans la première phase de décharge est de 3 litres, et le volume du réservoir 32 est de 2,3 litres, ce qui fait un volume total de 5,3 litres, comparable au volume total pour la pile de la figure 1 qui est de 5,3 litres,
- la concentration initiale de l'électrolyte dans le réservoir 31 est de 8N environ,
- la concentration initiale de l'électrolyte dans le réservoir 32 est de 17N environ,
- le débit de l'électrolyte est de 1,33 m3/heure,
- la durée totale de décharge est de huit minutes,

la puissance est de l'ordre de 20 Kwatts,

l'échangeur thermique doit être tel que la température de l'électrolyte entrant dans la pile soit maintenue vers 81° C.

La concentration de l'électrolyte en aluminates ne dépasse jamais dans le réservoir 31 une valeur critique qui, dans l'exemple choisi est 3 moles/litre. Si les conditions opératoires sont différentes (intensité du courant, température de fonctionnement...) cette valeur critique varie entre 2,5 moles par litre et 4,5 moles par litre.

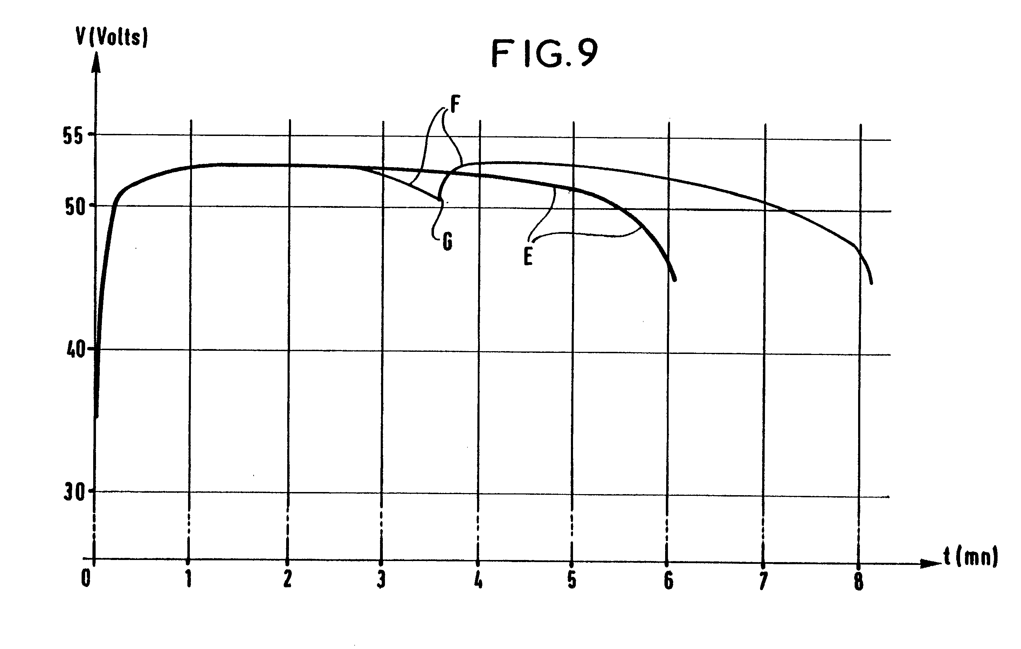

On a représenté dans la figure 9 la variation de la tension V (en volts) en fonction du temps t (en minutes) d'une pile de l'art antérieur (courbe E) et d'une pile selon l'invention (courbe F).

On voit que la pile de l'art antérieur (figure 1) dont le volume total d'électrolyte est de 5,3 litres présente une chute de tension V au bout de 6 minutes de fonctionnement.

Dans la pile selon l'invention (figure 2) dont le volume total d'électrolyte est de 5,3 litres, on observe également après 3 à 4 minutes cette chute (au point G) qui commande la vidange du réservoir 31 suivie du remplissage décrit plus haut : on observe que le fonctionnement de la pile est assuré jusqu'à huit minutes.

Bien entendu l'invention n'est pas limitée au mode de réalisation qui vient d'être décrit. Le meilleur mode consiste à réaliser une vidange complète du réservoir 31 afin d'éliminer pratiquement tous les aluminates. Mais on peut envisager une vidange partielle, et une régénération partielle de l'électrolyte pour la seconde phase de la décharge.

## Revendications

1. Pile amorçable à l'eau de mer comprenant :
   - un bloc électrochimique (2) mettant en oeuvre des couples AgO/Al et présentant une entrée (A) et une sortie (B) pour un circuit de distribution d'électrolyte (10) à base de soude,
   - ledit circuit de distribution d'électrolyte comportant une entrée (4) pour l'eau de mer, une sortie (9) pour l'évacuation vers la mer, une pompe (6) pour la circulation de l'électrolyte, un réservoir d'électrolyte en solution dont une première sortie est reliée directement à une première entrée d'une vanne thermostatique (12) et dont une seconde sortie est reliée par l'intermédiaire d'un échangeur thermique (7) à une seconde entrée de ladite vanne thermostatique dont la sortie est reliée à l'entrée dudit bloc électrochimique, caractérisée par le fait que ledit réservoir d'électrolyte est muni d'une cloison (35) le séparant en un premier réservoir (31) et un second réservoir (32), pouvant être mis en communication entre eux, et qu'elle comporte en outre des moyens pour vidanger ledit premier réservoir (31) après une durée de décharge déterminée et des moyens pour le remplir immédiatement en électrolyte à partir d'eau de mer supplémentaire et de l'électrolyte contenu dans ledit second réservoir (32).

2. Pile amorçable selon la revendication 1, caractérisé par le fait que ledit premier et ledit second réservoir sont remplis simultanément d'eau de mer au moment de l'amorçage.

3. Pile amorçable selon l'une des revendications 1 et 2, caractérisée par le fait que ledit premier réservoir (31) contient avant amorçage de la soude anhydre en poudre tandis que ledit second réservoir (32) contient avant amorçage de la soude en pastilles.

4. Pile amorçable selon l'une des revendications précédentes, caractérisée par le fait que l'électrolyte dudit second réservoir est initialement plus concentré que celui dudit premier réservoir.

## Claims

1. A battery activatable by seawater and comprising an electrochemical block (2) implementing AgO/A1 couples and having an inlet (A) and an outlet (B) of an electrolyte distribution circuit based on soda, said electrolyte distribution circuit including an inlet (4) for seawater, an outlet (9) towards the sea, a pump (6) for circulating the electrolyte, a tank of electrolyte in solution having a first outlet which is directly connected to a first inlet of a thermostatic valve (12), and a second outlet which is connected via a heat exchanger (7) to a second inlet of said thermostatic valve whose outlet is connected to the inlet of said electrochemical block, characterized in that the electrolyte tank is provided with a partition (35) separating it into a first tank (31) and a second tank (32) capable of being put into communication with each other, and that the battery further includes means for emptying said first tank (31) after a predetermined duration of discharge, and means for immediately filling it with electrolyte based on additional seawater and on the electrolyte contained in said second tank (32).

2. An activatable battery according to claim 1, characterized in that said first and second tanks are simultaneously filled with seawater when the battery is activated.

3. An activatable battery according to claim 1 or 2, characterized in that, prior to activation, said first tank (31) contains anhydrous soda in powder form whereas said second tank (32) contains soda in pellet form.

4. An activatable battery according to one of the preceding claims, characterized in that the electrolyte in said second tank is initially at a higher concentration than the electrolyte in said first tank.


**Ansprüche**

1. Durch Meerwaaser aktivierbare Batterie, mit einem elektrochemischen Block (2) für das Reaktionspaar AgO/A1, der einen Einlaß (A) und einen Auslaß (B) für einen Verteilkreis von Elektrolyt auf Sodabasis aufweist, wobei der Elektrolytverteilkreis einen Einlaß (4) für das Meerwasser, einen Auslaß (9) für die Ableitung zum Meer, eine Pumpe (6) zum Umwälzen des Elektrolyten, ein Reservoir für gelösten Elektrolyt, das mit einem ersten Auslaß direkt an einen ersten Einlaß eines thermostatischen Ventils (12) und mit einem zweiten Auslaß über einen Wärmetauscher (7) an einen zweiten Einlaß des thermostatischen Ventils angeschlossen ist, dessen Ausgang an den Eingang des Elektrolytblocks angeschlossen ist, dadurch gekennzeichnet, daß das Elektrolytreservoir mit einer Zwischenwand (35) versehen ist, die ihn in einen ersten Tank (31) und in einen zweiten Tank (32) unterteilt, die miteinander verbunden werden können,
und daß die Batterie weiter Mittel zum Entleeren des ersten Tanks (31) am Ende einer bestimmten Entladungsdauer und Mittel zu seinem sofortigen Füllen mit Elektrolyt durch zusätzliches Meerwasser und durch im zweiten Tank (32) enthaltenen Elektrolyten aufweist.

2. Aktivierbare Batterie nach Anspruch 1, dadurch gekennzeichnet, daß der erste und der zweite Tank im Augenblick der Aktivierung gleichzeitig mit Meerwasser gefüllt werden.

3. Aktivierbare Batterie nach einem der Ansprüche 1 und 2, dadurch gekennzeichnet, daß der erste Tank (31) vor der Aktivierung wasserfreien Soda in Pulverform enthält, während der zweite Tank (32) vor der Aktivierung Soda in Pillenform enthält.

4. Aktivierbare Batterie nach einem der vorhergehenden Ansprüche, dadurch gekennzeichnet, daß der Elektrolyt des zweiten Tanks anfänglich konzentrierter als der des ersten Tanks ist.

# FIG.1

EP 0 271 085 B1

FIG.2

EP 0 271 085 B1

# FIG. 3

# FIG.4A

# FIG.4B

# FIG.5A

# FIG.5B

# FIG.6A

# FIG.6B

# FIG.7A

# FIG.7B

# FIG.8A

# FIG.8B

# FIG.9

V (Volts)

55

50

40

30

0   1   2   3   4   5   6   7   8   t (mn)

F

G

E

EP 0 271 085 B1